# EUROPEAN PATENT APPLICATION

(11) **EP 0 862 344 A2**
(43) Date of publication of application: **02.09.1998**
(21) Application number: 97115952.0
(22) Date of filing: 12.09.1997
(51) Int. Cl.: H04Q 7/38

(54) **Distributed system and method of operation for validation of a wireless communication device**

(30) Priority: 28.02.1997 US 810316
(71) Applicant: Cellular Technical Services Company, Inc., Seattle, Washington 98121 (US)
(72) Inventor: Stanhope, David M., Tacoma, Washington 98467 (US); Millward, Robert, Seattle, Washington 98125 (US); Dewey, William A., Mill Creek, Washington 98012 (US); Wilburn, Howard L., Bainbridge Island, Washington 98110 (US)
(74) Representative: Grünecker, Kinkeldey, Stockmair & Schwanhäusser Anwaltssozietät

(57) **Abstract**

The present invention is directed to a distributed system for the authentication of a wireless communication device by creating a hierarchical system using different regions and groups of regions. If a wireless communication occurs within one region, a routine data storage area determines whether reference data is locally available to compare with data captured from the unauthenticated wireless communication device. If the reference data is not available, a routing processor passes at least a portion of the data to a higher level in a hierarchical system until the location of the reference data can be determined. The captured data and/or the reference data are passed to a common location for analysis in a conventional manner. In one embodiment, the common location is the region in which the reference data is stored. The captured data is transmitted to the location where the reference data is stored to permit signature analysis at that location. The results of the analysis are passed back to the region in which the unauthenticated wireless communication device is presently located. Alternatively, the region in which the data is stored may transmit the reference data to the location where the captured data has been acquired. If the wireless communication device has been identified as an authorized communication device, the communication can be processed. If the wireless communication device has been identified as a fraudulent device, the communication may be interrupted or redirected to a fraud intercept location. The technique also provides for the automatic update of routing data storage areas so that a change in one routing data storage area will be automatically passed through the remaining necessary portions of the system.

## Description

### TECHNICAL FIELD

The present invention relates generally to wireless telephone operation, and, more particularly, to a distributed system and method of operation for the validation of a wireless communication device.

### BACKGROUND OF THE INVENTION

In a communications network, it is often desirable to identify and distinguish one transmitter from other transmitters operating within the network. For example, in the radio telephone industry, a cellular telephone system utilizes an electronic serial number (ESN) and a mobile telephone identification number (MIN) to provide a unique identification for each transmitter. When an individual subscriber or other authorized user of a particular cellular telephone wishes to place a phone call, he dials in a telephone number and presses the "Send" button. In response, his cellular telephone transmits its ESN and MIN to the cellular network so the individual subscriber can be charged for the telephone call.

Unfortunately, unscrupulous individuals illegally operate cellular telephones by counterfeiting the ESN and MIN of a valid subscriber's telephone in order to obtain illegal access to the cellular network without paying for the service. The ESN and MIN of a cellular telephone can be obtained by a counterfeiter electronically monitoring the initial transmission of the telephone, and then programming the detected ESN and MIN into another telephone for illegal use. Thus, the mere transmission of the authentic ESN and MIN is by itself inadequate to protect a cellular telephone system from misuse by counterfeiters. When a cellular telephone initiates a call, it transmits its ESN and MIN as an identification. While the cellular telephone is identified by its ESN and MIN, it cannot be considered as an authorized cellular telephone because it is not known whether the ESN and MIN have been transmitted by the authorized cellular telephone or a fraudulent cellular telephone. For purposes of the present description a cellular telephone identified on the basis of the transmitted ESN and MIN is designated as an unauthenticated cellular telephone until it is determined to be an authorized cellular telephone or a fraudulent cellular telephone.

In an effort to provide additional security, some cellular systems and other wireless services, authenticate mobile units based on the radio frequency (RF) transmission of data by the mobile unit during a call set-up process. Rather than identify the mobile unit by its ESN and MIN alone, the system also identifies a cellular telephone by its transmission characteristics. In this manner, the cellular system operator can reject calls from illegitimate cellular telephones even when those cellular telephones transmit valid ESN and MIN numbers. For example, in U.S. Patent No. 5,005,210 issued to Ferrell on April 2, 1991 ("the Ferrell patent"), a signature analysis system is described that analyzes certain transmitter characteristics in an effort to identify the transmitter type. The system in the Ferrell patent analyzes the manner in which the modulator makes a transition to the designated carrier frequency. This transient response is used to identify the type of transmitter.

While the Ferrell patent describes one class of transmission characteristics that can be used to identify a particular transmitter, other transmission characteristics are also known in the art. For example, U.S. Patent No. 5,420,910 issued to Rudokas et al. on May 30, 1995 ("the Rudokas patent"), describes an identifier, such as a radio frequency signature, that can be used to positively identify a valid cellular telephone or a known fraudulent telephone. Other types of signature authentication systems are also known in the art and need not be described herein. These transmission characteristics, from whatever source they are derived, can be processed in different manners to create a "fingerprint" of the individual transmitter. The analogy with fingerprints is used because each transmitter fingerprint is believed to be completely unique. The transmitter fingerprint can be used to determine whether the transmission characteristics of the unauthenticated transmitter match the stored fingerprint of the authorized transmitter corresponding to the transmitted ESN and MIN. In such manner, the fingerprint is used with cellular telephone calls to authenticate the cellular telephone.

Fingerprint authentication systems all require at least one transmission characteristic waveform, known to be generated by the authentic cellular telephone, to be used as a reference waveform for the fingerprint authentication system. Some systems may rely on more than one reference waveforms to generate the fingerprint.

The advantage of analyzing the transmission characteristic of the unauthenticated transmitter is that it does not rely on data such as the ESN and MIN to verify the authenticity of the cellular telephone. A disadvantage of such identification techniques is that identification of an unauthenticated transmitter is only possible when reference waveforms for the authentic cellular telephone are available to the signature analysis system. If the user only operates the cellular telephone in one geographic region, signature analysis techniques are effective to prevent fraudulent misuse of the ESN and MIN. However, cellular telephones are often used in a "roaming" mode in which the user operates the cellular telephone outside his home geographic region. Under these circumstances, the reference waveforms are unavailable to the signature analysis system in areas outside the user's home geographic region. Thus, signature analysis techniques are ineffective when the user is roaming in an area outside his home geographic region. Therefore, it can be appreciated that there is a significant need for a system for analyzing transmission characteristics that will allow the use of fingerprints even when roaming. The present invention provides this and other advantages as will be illustrated by the following description and accompanying figures.

### SUMMARY OF THE INVENTION

The present invention is embodied in a system and method for the validation of wireless communication using a customer wireless telephone and a wireless telephone system. The system includes a plurality of authentication processors, each serving a separate geographic area and having a data collection element to acquire authentication data from an unauthenticated wireless telephone. A particular one of the plurality of authentication processors acquires authentication data from an unauthenticated wireless telephone during a present communication with the unauthenticated wireless telephone in the geographic area served by the particular processor. The system also includes a storage area in a location apart from the particular processor containing reference data associated with a customer wireless telephone. An analysis unit analyzes the acquired authentication data with respect to the stored reference data associated with the customer wireless telephone. The analysis unit determines if the unauthenticated wireless telephone is the customer wireless telephone or a fraudulent wireless telephone. The analysis unit generates a response indicator to indicate that the analysis unit has determined the unauthenticated wireless telephone to be one of the customer wireless telephone and a fraudulent wireless telephone. A communications processor controls communications between the particular processor, the storage area, and the analysis unit.

In one embodiment, the particular processor may generate an interdiction indicator to a cell site controller to indicate that the present communication is invalid if the response indicator indicates that the unauthenticated wireless telephone has been determined to be a fraudulent wireless telephone. Alternatively, the particular processor can generate an authorization signal to a cell site controller to indicate that the present communication is valid if the response indicator indicates that the unauthenticated wireless telephone has been determined to be the authorized wireless telephone.

The analysis unit may be part of the particular processor acquiring the authentication data or a portion of a second one of the plurality of authentication processors serving a separate geographic area from the particular processor. When the analysis unit is a portion of the particular processor acquiring the authentication data and the storage area is a portion of a second one of the plurality of authentication processors, the communications processor routes stored reference data from the second one of the plurality of authentication processors to the analysis unit in the particular processor to permit the analysis of the acquired authentication data with respect to the stored reference data in the particular processor. When the analysis unit and storage area are portions of a second one of the plurality of authentication processors, the communications processor routes the acquired authentication data from the particular processor to the analysis unit in the second one of the plurality of authentication processors to permit the analysis of the acquired authentication data with respect to the stored reference data in the second one of the plurality of authentication processors. In this situation, the communications processor may also route the response indicator from the second one of the plurality of authentication processors to the particular processor.

In an exemplary embodiment, the communications processor routes the acquired authentication data or the stored reference data to the analysis unit during the present communication to permit the analysis unit to perform the analysis of the acquired authentication data with respect to the stored reference data during the present communication. In an alternative embodiment, the communications processor routes stored reference data from the storage area to the analysis unit at a time prior to the present communication and the analysis unit performs the analysis of the acquired authentication data with respect to the stored reference data during the present communication.

The analysis unit may perform additional analysis on the acquired authentication data to determine whether it should be included as a portion of the stored reference data. During a subsequent communication, the authentication data acquired by the data collection element during the subsequent communication is analyzed with respect to the stored data, including the portion of data included by the analysis unit as a portion of the stored reference data.

In a system wherein the wireless communication device transmits identification data, the storage area is associated with one of the plurality of authentication processors. In this embodiment, the system also includes a routing processor associated with each of the plurality of authentication processors to determine with which of the plurality of authentication processors the storage area is associated. Each routing processor includes a routing data storage area to store routing data in association with the identification data of the wireless communication device. The routing processor accesses the corresponding routing storage area for the routing data associated with the identification data of the wireless communication device. The system can also include means within one of the routing processors for altering the routing data in the corresponding routing data storage area. If the routing data has been altered, the one routing processor generates an alteration signal to indicate alteration of the routing data in the corresponding routing data storage area. The system may further include alteration detection means within a second one of the routing processors to detect the alteration signal. The second routing processor alters the routing data in the corresponding routing data storage area so that it matches the altered routing data in the routing data storage area corresponding to the one routing processor. This technique permits the automatic updating of routing data contained within routing data storage areas.

### BRIEF DESCRIPTION OF THE DRAWINGS

Figure 1 is a functional block diagram of a known signature analysis system wherein an authentication processor is co-located with a receiver receiving transmission characteristics from an unauthenticated wireless transmitter.

Figure 2 illustrates the use of the authentication processor of Figure 1 to analyze captured transmission characteristics from a plurality of receivers within a single region.

Figure 3A is a functional block diagram of the system of the present invention using a distributed authentication system.

Figure 3B is a functional block diagram of an alternative embodiment of the system of the present invention using an authentication system.

Figure 4 is a functional block diagram of the system of Figure 3 illustrating details of two geographic regions of the distributed authentication processing system of the present invention.

Figure 5 illustrates the operation and data processing steps performed by the system of Figure 4.

Figure 6 is a functional block diagram of a routing processor to update routing data for the distributed authentication system of Figure 3.

### DETAILED DESCRIPTION OF THE INVENTION

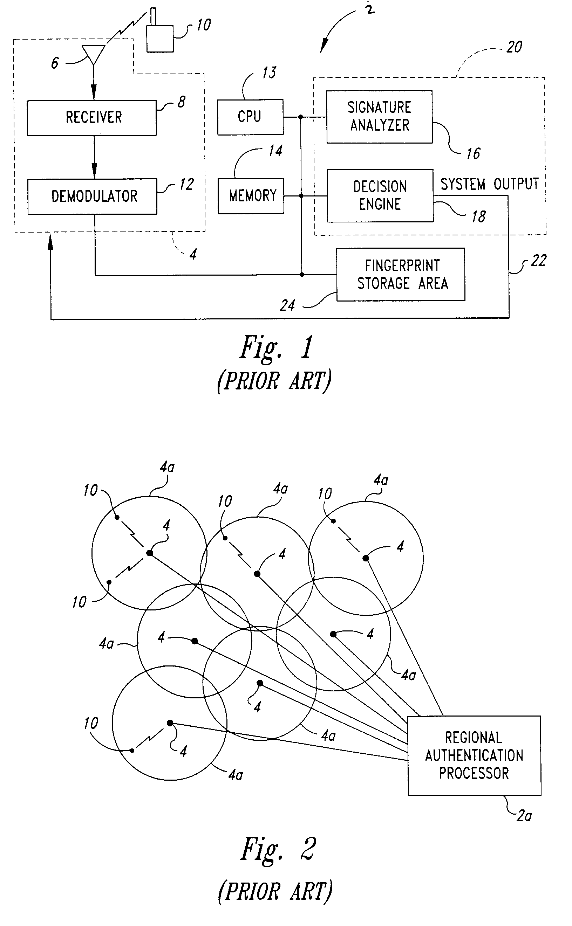

The operation of wireless telephone systems is well-known, and will only be discussed briefly herein as related to signature analysis. Although the discussion that follows is directed to cellular telephones, it should be clearly understood that the invention can be used with wireless telephone devices that may transmit voice, such as cellular telephones, or data, such as data modems. The term telephone as used herein is intended to include devices for wireless voice and data communication. A conventional authentication processor 2 is illustrated in Figure 1. A cell site controller 4 includes an antenna 6, which is coupled to a receiver 8. For the sake of brevity, other conventional cell site components, such as a transmitter, are omitted from this discussion. A radio frequency signal from a cellular telephone 10 is received by the antenna 6 and receiver 8, typically in the 800 megahertz (MHz) frequency range. A demodulator 12 demodulates the radio frequency signal. Many known signature analysis systems analyze certain characteristic waveforms in the output of the demodulator 12 to determine whether the cellular telephone 10, which is presently unauthenticated, is an authorized cellular telephone or a fraudulent cellular telephone. The cell site controller 4 verifies the authenticity of the ESN and MIN transmitted by the cellular telephone at the beginning of a cellular telephone call.

The authentication processor 2 illustrated in Figure 1 is typically installed at the location of and communicates with the cell site controller 4. The authentication processor 2 includes a CPU 13 that processes the data from the demodulator 10. Many of the processes described with respect to Figure 1 are performed by the CPU 13 using conventional programming techniques. The programming techniques are well within the knowledge of those of ordinary skill in the art of computer programming and need not be described in detail herein.

The authentication processor 2 also includes a memory 14, which may include both random access memory (RAM) and read-only memory (ROM). A signature analyzer 16 performs a signature analysis of transmission characteristics of the transmitter in the unauthenticated cellular telephone 10. Some signature analysis techniques have been described in the Background of the Invention section herein and will work satisfactorily in the authentication processor 2. One example of a signature analysis technique is described in U.S. Patent Application No. 08/611,429, entitled "Adaptive Waveform Matching For Use In Transmitter Identification," filed on March 6, 1996, which is incorporated herein by reference in its entirety. That system performs a real-time analysis of the captured transmission characteristics From the unauthenticated cellular telephone 10 and compares the captured transmission characteristics with stored reference waveforms.

A decision engine 18 uses the results of the signature analyzer 16, as well as other forms of data to determine whether the present call from the unauthenticated cellular telephone 10 is valid or invalid. A valid call is a call from an authorized cellular telephone (that corresponds to the ESN and MIN transmitted by the telephone), while an invalid call is one from a fraudulent cellular telephone. The signature analyzer 16 and decision engine 18 together form an analysis unit 20. If the present call from the unauthenticated cellular telephone 10 is determined by the decision engine 18 to be an invalid call from a fraudulent cellular telephone, the analysis unit 20 generates a system output signal 22 to indicate to the cell site controller 4 that the present call is invalid. The cell site controller 4 may terminate the invalid call or connect the invalid call to an alternative telephone number designated to receive interdicted fraudulent telephone calls. If the decision engine 18 determines that the present call is a valid call from the authorized cellular telephone, the system output 22 indicates to the cell site controller 4 that the present call can be processed. Alternatively, the analysis unit 20 may generate no output when the present call is determined to be valid, which simply allows processing of the present call to go on unimpeded. In this embodiment, the cell site controller 4 processes all calls unless it receives an interdiction message from the system output 22 of the analysis unit 20.

The signature analyzer 16 analyzes the captured transmission characteristics from the unauthenticated cellular telephone and compares those transmission characteristics with stored reference waveforms that are known to be from the authorized cellular telephone. The authentication processor 2 typically uses the transmitted ESN and/or MIN as an index to a fingerprint storage area 24. The fingerprint storage area 24 stores the reference waveforms that are associated with the authorized cellular telephone. The signature analyzer 16 compares the captured transmission characteristics from the unauthenticated cellular telephone 10 with the previously processed and stored reference waveforms corresponding to the ESN/MIN transmitted from the unauthenticated cellular telephone. The results of the signature analyzer 16 can be used as an input to the decision engine 18. The decision engine 18 may also use other forms of data input to determine whether the unauthenticated cellular telephone 10 is likely the authorized cellular telephone or a fraudulent cellular telephone. Some forms of the decision engine are known in the art, such as those described in the previously referenced U.S. Patents, such as the Rudokas patent. Another form of the decision engine 18 is described in copending U.S. Patent Application No. (Express Mail No. EM330171925US/Attorney Docket No. 200097.403), entitled "System And Method For Detection Of Fraud In A Wireless Telephone System," filed on February 28, 1997, which is incorporated herein by reference in its entirety. In that application, the decision engine 18 accepts data inputs, such as customer call profile, known valid destination telephone numbers, known fraudulent destination telephone numbers, and the like and combines these various inputs to generate the system output 22. In one embodiment, the decision engine 18 may be a fuzzy logic classifier that combines the various data inputs to generate the system output.

The fingerprint storage area 24 may contain reference waveforms used by the signature analyzer 16 as well as other forms of data used by the decision engine 18, as described above. Figure 1 illustrates the operation of the authentication processor 2 operating in conjunction with the cell site controller 4. However, in some applications, the authentication processor 2 may serve multiple cell site controllers. This is illustrated in Figure 2 where a conventional regional authentication processor 2a serves a plurality of cell site controllers 4. Each cell site controller 4 controls communications with cellular telephones within a corresponding cell 4a, which are illustrated in Figure 2 as roughly circular, overlapping geographical regions. However, those skilled in the art will recognize that the cells 4a may be of varying size and shape. The present invention, which will be described below, is not limited by the specific geographical configuration of the cells. Each cell site controller 4 captures transmission characteristics from unauthenticated cellular telephones and transmits the captured transmission characteristics as well as the ESN/MIN to the regional authentication processor 2a. The regional authentication processor 2a includes the analysis unit 20 (*i*.*e*., the signature analyzer 16 and the decision engine 18), and the fingerprint storage area 24. The regional authentication processor 2a determines the validity of cellular calls from all of the cells 4a and transmits the system output 24 back to each of the respective cell site controllers 4.

The advantage of the conventional system illustrated in Figure 2 is that only a single fingerprint database is used within a particular region. A region, as used herein, refers to a market as defined by the Federal Communications Commission. A region or market is typically a geographic region that is served by at least two cellular service providers. The region can be defined by a set of MINs. For example, the area codes 206 and 360 cover the western Washington geographic region. A region or market may be defined by one or more area codes. For example, a geographic region may be defined as a single area code, such as 206, or as multiple area codes, such as 206 and 360. It should be noted that area codes are referred to in the telephony industry as a number plan area (NPA). Therefore, a region or market may be defined by one or more NPAs. The telephone exchange portion of a telephone number, designated by the telephony industry as NXX, may also be used to define a region or market. Thus, a region or market can be a selected list or range of NXXs for a particular NPA.

The fingerprint storage area 24 (see Figure 1) of the regional authentication processor 2a For the particular region contains reference waveforms and other reference data for all cellular telephones whose MIN corresponds to the particular region. However, if a cellular telephone from a different region is operated within the region for the regional authentication processor 2a in a "Roam" mode, it is, by definition, operating outside its normal region. For example, if the regional authentication processor 2a is used to authorize cellular telephone calls within the 206 area code, the fingerprint storage area 24 (see Figure 1) will not contain data for a cellular telephone whose MIN corresponds to a different area code. Thus, a person traveling from the northern Virginia area, having a MIN with an area code of 703, will not have reference data stored within the fingerprint storage area 24 of the regional authentication processor 2a. Under these circumstances, the regional authentication processor 2a cannot analyze the captured transmission characteristics of the unauthenticated cellular telephone from the 703 area code. The cellular service provider may address this problem by either processing all Roaming calls, or intercepting all Roaming calls to get additional information from the user. The former approach may result in numerous fraudulent cellular telephone calls being processed by the cellular service provider while the latter approach results in great inconvenience and frustration to the user.

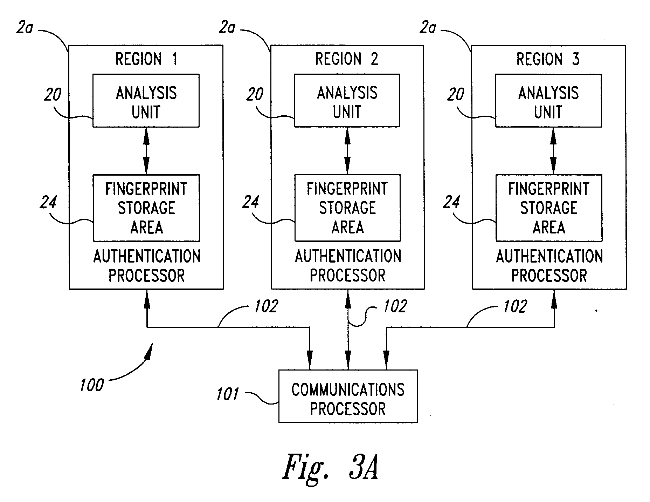

The present invention provides a technique for sharing of fingerprint data and distributed analysis for cellular telephones operating in the Roam mode. The present invention is embodied in a system 100, shown in the functional block diagram of Figure 3A. A regional authentication processor 2a operates in a conventional manner, such as described above with respect to Figures 1 and 2, when the present call from an unauthenticated cellular telephone has a MIN corresponding to that region (see Figure 1). That is, a region 1 authentication processor 2a includes the analysis unit 20 (see Figure 1) (containing the signature analyzer 16 and decision engine 18), and the fingerprint storage area 24. The fingerprint storage area 24 for the region 1 authentication processor 2a contains fingerprint data associated with the cellular telephones whose MINs correspond to region 1. Each of the other regional authentication processors 2a contain identical components and operate in an identical manner for cellular telephones whose MINs correspond to their respective regions.

If a cellular telephone call originates in one region, but has an MIN corresponding to a different region (*i*.*e*., it is a Roaming call), the regional authentication processor 2a processing the telephone call will not have the fingerprint data associated with the authorized cellular telephone. In that event, a communications processor 101 controls communications between the regional authentication processor 2a for the region in which the call is originating and the regional authentication processor 2a for the remotely located region corresponding to the MIN. The communications processor 101 is coupled to the various regional authentication processors 2a by a plurality of communication lines 102.

As will be discussed in greater detail below, the system 100 permits the analysis of data by the analysis unit 20 in the regional authentication processor 2a in which the present call originated or by the analysis unit in the regional authentication processor whose fingerprint storage area 24 contains the fingerprint data associated with the authorized cellular telephone.

In one embodiment, the regional authentication processor 2a of the region where the call originates transfers the captured transmission characteristics and other data to the analysis unit 20 for the remotely located region where the fingerprint data is stored for analysis by the analysis unit 20 at a location remote from the originating regional processor. For example, if the present call from the unauthenticated cellular telephone call occurs in region 1, the region 1 authentication processor 2a captures the transmission characteristics and other data from the unauthenticated cellular telephone. The region 1 authentication processor 2a transfers the captured transmission characteristics and other data via the communications processor 101 to the analysis unit 20 in the region in which the fingerprint data is stored, for example in region 2. The analysis unit 20 of region 2 accesses the fingerprint storage area 24 for region 2 and performs the analysis of the captured transmission characteristics and other data with respect to the stored fingerprint in a known manner. The region 2 analysis unit 20 determines whether the present call is a valid call from the authorized cellular telephone or an invalid call from a fraudulent cellular telephone. The region 2 analysis unit 20 transmits the results of the analysis back to the region 1 authentication processor 2a via the communications processor 101 and communication lines 102. In this manner, the fingerprint data associated with a particular authorized cellular telephone is stored in only one location. This permits the easy update of the fingerprint data since it is stored in only one location.

In an alternative embodiment, the stored fingerprint data is transferred from the fingerprint storage area 24 to the regional authentication processor in which the present call is originating for analysis by the regional authentication processor in the originating region. That is, if the call is originating in region 1, the region 1 authentication processor 2a captures the transmission characteristics and other data from the unauthenticated cellular telephone. The region 1 authentication processor 2a requests the transfer of the fingerprint data associated with the transmitted ESN/MIN. The communications processor 101 links the region 1 authentication processor 2a via the communications lines 102, to the appropriate region whose fingerprint storage area 24 contains the necessary fingerprint data, for example in region 2. The fingerprint data is transferred from the region 2 fingerprint storage area 24, via the communications processor 101 to the region 1 authentication processor 2a. The region 1 analysis unit 20 performs the analysis in a known manner to determine whether the present call is a valid call from the authorized cellular telephone or an invalid call from a fraudulent cellular telephone. Thus, the fingerprint data may be transferred from the region in which the data is stored to the regional authentication processor in which the call is originating, or the captured transmission characteristics and other data may be transferred from the region in which the call is originating to the region whose fingerprint storage area 24 contains the data associated with the authorized cellular telephone.

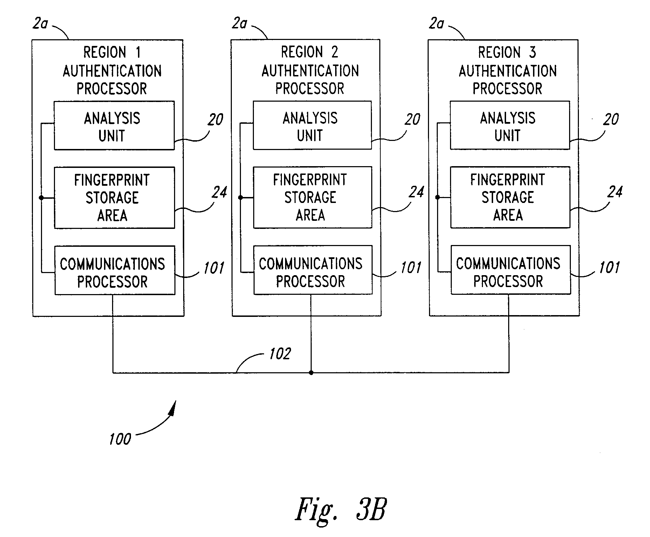

For the sake of clarity, Figure 3A illustrates a single communications processor 101. However, in an exemplary embodiment of the system 100, each regional authentication processor 2a contains its own communications processor 101, as shown in Figure 3B. The communications processors 101 in each regional authentication processor 2a communicate with each other via the communication lines 102. The communication lines 102 may be any suitable form of communication line, such as a dial-up modem, a high speed communication line, such as an ISDN line, a wireless link, such as a microwave link, direct wire connection, network connection, or the like. The present invention is not limited by the specific form of the communication lines 102.

A distributed authentication system offers the twin advantages of a smaller storage requirement for the fingerprint storage area 24 as well as a lower requirement for computer power due to the lower call traffic volume within each region as compared with the high traffic volume of a central authentication processing system. However, in one embodiment, the fingerprint storage area 24 of one region, for example in region 3, can be a central fingerprint storage area, which acts as a clearinghouse for fingerprint data for all regional authentication processors. With a central fingerprint storage area, each regional authentication processor 2a captures transmission characteristics from unauthenticated cellular telephones and, using the communications processor 101, either transfers the captured transmission characteristics to the analysis unit 20 of the central authentication processor or requests the transfer of fingerprint data from the fingerprint storage area 24 of the central authentication processor for analysis by the regional authentication processor 2a in which the present call is originating, for example in region 1. The advantage of a central clearinghouse using the fingerprint storage area 24 is that fingerprint data is stored in a single location and may be readily updated. However, the disadvantage of this approach is that the central clearinghouse must have a large data storage capacity as well as a large amount of computing power to analyze numerous authentication requests from all of the regional authentication processors 2a.

There are known techniques by which to generate the fingerprint for storage within the fingerprint storage area 24. One example of the generation of a fingerprint is described in the above-referenced U.S. patent application entitled "Adaptive Waveform Matching for Use in Transmitter Identification." In normal operation, the regional authentication processor 2a for the region corresponding to the MIN is used to generate the fingerprint for storage in the fingerprint storage area 24. For example, if a particular cellular telephone has a MIN corresponding to region 2, the analysis unit 20 in region 2 captures transmission characteristics and other data and, using known techniques, generates a fingerprint for storage within the fingerprint storage area 24 in region 2. If the cellular telephone is later used in region 1, the fingerprint data in the region 2 fingerprint storage area 24 is used in the manner described above to determine whether the present call is from the authorized cellular telephone or a fraudulent cellular telephone. The transmission characteristics captured during the present call by the analysis unit 20 in region 1 can be used to update or supplement the fingerprint within the fingerprint storage area 24 in region 2. Techniques for analyzing additional capture transmission characteristics for possible inclusion in a fingerprint are also discussed in the above-referenced pending patent application.

In an alternative embodiment, the central fingerprint storage area of one region, for example in region 3, can store fingerprint data for a cellular telephone whose MIN corresponds to a region (not shown) that does not have a fingerprint storage area 24. For example, a region (not shown) that does not use the system 100 may have no fingerprint storage area and thus would not typically have signature analysis capability. However, the system 100 can capture transmission characteristics in any region containing the analysis unit 20 and generate a fingerprint in a known manner. The generated fingerprint may then be stored in the central fingerprint storage area. For example, if the cellular telephone whose MIN corresponds to a region (not shown) that has no fingerprint storage area 24 is used within region 1, the region 1 analysis unit 20 can capture transmission characteristics from one or more calls from the unauthenticated cellular telephone. These captured transmission characteristics are used in a known fashion to generate a fingerprint for temporary storage in the region 1 fingerprint storage area 24. The fingerprint data may be subsequently transferred to the central fingerprint storage area of one region, for example in region 3. During subsequent use of the unauthenticated cellular telephone in any region, that region can use the fingerprint data in the central fingerprint storage area. For example, if the cellular telephone is subsequently used in region 2, the region 2 analysis unit 20 captures transmission characteristics from the subsequent call and compares the captured transmission characteristics with the fingerprint stored in the central fingerprint storage area. Thus, the system 100 permits the generation of fingerprint data in one region (*e*.*g*., region 1) for storage in a second region (*e*.*g*., region 3) for subsequent analysis by a third region (*e*.*g*., region 2). The region (not shown) associated with the MIN may later install the system 100. The analysis unit may be used to establish a new fingerprint or the fingerprint from the central fingerprint storage area may be transferred to the fingerprint storage area of the new region. The advantage of the distributed analysis is the ability to transfer data from one region to another for purposes of signature analysis.

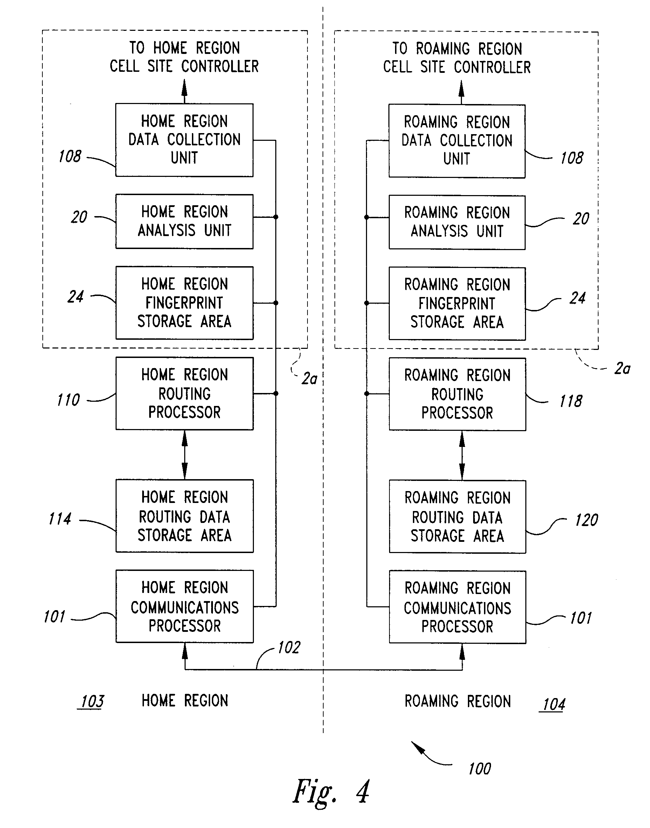

Figure 4 is a functional block diagram that illustrates the operation of the system 100 in greater detail. For the sake of simplicity, Figure 4 illustrates a home region 103 and a roaming region 104. It should be noted that the home region 103 is designated as a "home," but it may be any region that stores the fingerprint data associated with a particular cellular telephone. It need not be the geographical region for the subscriber's cellular telephone. Thus, for purposes of the present discussion, "home region" simply refers to the region in which the reference data is stored for a particular cellular telephone.

Within the home region 103 is a data collection unit 108, a home region analysis unit 20 and a home region fingerprint storage area 24. It should be noted that these components are portions of the conventional regional authentication processor 2a and are thus illustrated in Figure 4 surrounded by a dashed line with the reference numeral 2a. The home region data collection unit 108 is coupled to a cell site controller 4 (see Figure 2) and receives captured transmission characteristics and other data from the cell site controller for the home region. In addition to the captured transmission characteristics, the cell site controller 4 transmits the ESN/MIN of the unauthenticated cellular telephone and may also transmit information such as the dialed digits (the destination telephone number dialed by the unauthenticated cellular telephone), time of day, and other data related to the present call from the unauthenticated cellular telephone. The data collection unit 108 is coupled to the home region analysis unit 20 and the home region fingerprint storage area 24. The home region analysis unit 20 and home region fingerprint storage area 24 operate in a manner described above. It should be noted that the system 100 operates satisfactorily with any suitable signature analysis system. The present invention is not directed to signature analysis per se, but to a technique for transferring data used for signature analysis between various regions.

A home region routing processor 110 is used to determine whether the unauthenticated cellular telephone is within its home region or if the unauthenticated cellular telephone is assigned to a different region. The home region routing processor 110 is used in conjunction with a home region routing data storage area 114 to determine whether the unauthenticated cellular telephone has fingerprint data stored in the home region fingerprint storage area 24. As previously discussed, the system 100 uses the transmitted MIN of the unauthenticated cellular telephone to determine whether the unauthenticated cellular telephone has data stored in the home region fingerprint storage area 24. As is well known in the art, the MIN includes the area code or NPA, a telephone exchange, designated by the telephony industry as NXX and a subscriber number, designated by the telephony industry as XXXX. A typical cellular telephone region will have one NPA and a range of NXX values that are part of that region. The home region routing processor 110 accesses the home region routing data storage area 114 to determine whether the transmitted MIN corresponds to the range of NPA and NXX values for the home region 103.

The home region routing data storage area 114 contains routing data, such as all NPAs and NXXs. The home region routing processor 110 can thereby readily determine which region will have the fingerprint data for the authorized cellular telephone whose MIN has been transmitted by the unauthenticated cellular telephone. Alternatively, the transmitted ESN or other identification data may be used as an index to the home region routing data storage area 114 to determine which region contains the fingerprint data corresponding to the authorized cellular telephone having the transmitted ESN/MIN. If the transmitted ESN/MIN corresponds to the home region 103, the home region fingerprint storage area 24 will contain data corresponding to the authorized cellular telephone whose MIN has been transmitted by the unauthenticated cellular telephone. The home region analysis unit 20 performs conventional signature analysis, or other data analysis, to determine whether the unauthenticated cellular telephone is the authorized cellular telephone or a fraudulent cellular telephone. The home region routing data storage area 120 may contain routing data for all regions within a country, such as the United States. Storing routing data for the entire country within the home region routing data storage area 120 has the advantage that a simple operation can be used to determine the region that contains the appropriate fingerprint data. However, the disadvantage of this approach is that changes in the NPA or NXX in one region require that the routing data storage area of each region be modified in order to properly route the data requests between regions.

In a preferred embodiment, the home region routing data storage area 120 contains routing data only for the range of NPA and NXX values for the home region 103. If the unauthenticated cellular telephone transmits a MIN that does not fall within the range of the NPA and NXX values corresponding to the home region 103, a distributed routing system will determine the appropriate region whose fingerprint storage area contains the fingerprint data for the authorized cellular telephone corresponding to the transmitted MIN. The operation of this distributed routing system will be described in greater detail below. The system 100 also includes a home region communications processor 124 to communicate with other regional authentication processors, as will also be described in detail below.

The roaming region 104 includes identical components described above with respect to the home region 103. For example, the roaming region 104 includes a roaming region data collection unit 108, which performs an identical function to that of the home region data collection unit 108. That is, the roaming region data collection unit 108 is coupled to one or more roaming region cell site controllers and receives captured transmission characteristics and other data, such as ESN/MIN, from the cell site controllers within the roaming region 104. The roaming region data collection unit 108 is coupled to a roaming region authentication processor 20 and a roaming region fingerprint storage area 24. The roaming region authentication processor 20 and roaming region fingerprint storage area 24 operate in the manner described above. A roaming region routing processor 118 and roaming region routing data storage area 120 operate in the manner described above for the home region routing processor 110 and home region routing data storage area 114, respectively. That is, the roaming region routing processor 118 uses the captured MIN or ESN and accesses the roaming region routing storage area 120 to determine whether the roaming region fingerprint storage area 24 contains fingerprint data for the authorized cellular telephone corresponding to the transmitted ESN/MIN of the unauthenticated cellular telephone. The roaming region 104 also includes a roaming region communications processor 101 to control communications between the roaming region 104 and the home region 103. The home region communications processor 101 and the roaming region communications processor 101 are coupled to each other by the communication line 102.

If the unauthenticated cellular telephone is operating within its home region, the fingerprint data is locally available within the home region fingerprint storage area 24. The signature analysis is performed in a well known fashion. However, if the unauthenticated cellular telephone is operating in the roaming region 104, a roaming region cell site controller will capture transmission characteristics and the ESN/MIN data from the unauthenticated cellular telephone. The roaming region data collection unit 108 receives the captured transmission characteristics and other data (*e*.*g*., the ESN/MIN) from the roaming region cell site controller. The roaming region routing processor 118 determines that the transmitted MIN corresponds to a different region. This indicates that the roaming region fingerprint storage area 24 does not contain the necessary fingerprint data to authenticate the unauthenticated cellular telephone.

The ESN/MIN transmitted by the unauthenticated cellular telephone is analyzed by the roaming region routing processor 118. The roaming region routing processor 118, and roaming region routing data storage area 120 will determine that the unauthenticated cellular telephone is assigned to the home region 103. The roaming region communications processor 101 communicates with the home region communications processor 101 to transfer the captured transmission characteristics and other data (*e*.*g*., the ESN/MIN) from the unauthenticated cellular telephone to the home region 103 for analysis by the home region analysis unit 20. The home region analysis unit 20 analyzes the captured transmission characteristics and other data with respect to the fingerprint data stored in the home region fingerprint storage area 24 in a manner known in the art. The decision engine 18 (see Figure 1) in the home region analysis unit 20 transmits the system output to the roaming region authentication processor 2a via the home region communications processor 101 and the roaming region communications processor 101. In this embodiment, the captured transmission characteristics are transferred to the home region 103 for analysis and the result is returned to the roaming region 104. As previously noted, in some embodiments, the decision engine 18 does not generate a system output if the present cellular telephone call is determined to be a valid call from the authorized cellular telephone. In that situation, the home region analysis unit 20 only returns data to the roaming region authentication processor 2a if the present call from the unauthenticated cellular telephone is determined to be an invalid call from a fraudulent cellular telephone. Otherwise the present call is allowed to be processed without interference.

Alternatively, the roaming region communications processor 101 requests the necessary fingerprint data from the home region fingerprint storage area 24 so that the roaming region analysis unit 20 may authenticate the unauthenticated cellular telephone. In this embodiment, the home region fingerprint storage area 24 transfers the fingerprint data to the roaming region authentication processor 2a via the home region communications processor 101 and roaming region communications processor 101. In this embodiment, the fingerprint analysis is performed by the roaming region analysis unit 20 in the manner similar to that described above.

The advantage of the system 100 is that fingerprint data need be stored in only one location (*i*.*e*., the home region fingerprint storage area 24). This is a distinct advantage over systems in which fingerprint data must be distributed to every regional authentication processor 2a because the stored fingerprint data for a cellular telephone may be readily updated if it is stored in only a single location. The captured transmission characteristics and other data are typically formed into a data file by the data collection unit (either the home region data collection unit 108 or the roaming region data collection unit 108) for analysis by the home region analysis unit 20 or the roaming region analysis unit 20. If the data file associated with the captured transmission characteristics is approximately equal in size to the data file associated with the fingerprint for the authorized cellular telephone the analysis can be performed by either the home region analysis unit 20 or the roaming region analysis unit 20 without any decrease in performance of the system 100. That is, when the transmission of the fingerprint data for an unauthenticated cellular telephone from the home region fingerprint database 24 to the roaming region analysis unit 20 requires approximately the same transmission bandwidth as does the transmission of the data file associated with the captured transmission characteristics and other data for the unauthenticated cellular telephone from the roaming region 104 to the home region analysis unit 20. However, in most circumstances, the data file associated with the fingerprint data is significantly larger than the data file associated with the captured transmission characteristics and other data. As such, it is generally more efficient to transfer the captured transmission characteristics and other data from the roaming region 104 to the home region 103 for analysis by the home region analysis unit 20. However, with either embodiment, the system 100 still offers the advantage that the fingerprint data need only be stored in a single location.

In yet another alternative embodiment, a copy of fingerprint data may be transferred from the home region 103 to the roaming region 104 for temporary storage in the roaming region fingerprint storage area 134. This is particularly useful when a cellular telephone is in a roaming mode for an extended period of time. For example, a user may place several calls while in the roaming region 104. It may be more efficient to transfer a copy of the fingerprint data from the home region fingerprint storage area 24 for a temporary storage in the roaming region fingerprint storage area 24. In this embodiment, the copy of fingerprint data, which is now locally stored, may be used to analyze additional subsequent calls from the roaming cellular telephone. The transferred fingerprint data may be temporarily stored in the roaming region fingerprint storage area 24 for a predetermined period of time. For example, the temporarily transferred fingerprint data could be stored until no additional calls have been received from that cellular telephone for a predetermined period of time, such as a week. Thus, all unused fingerprint data files that have been transferred from other regions are considered "stale" and may be discarded. In addition, there are known techniques for updating fingerprint data. The system 100 can analyze data captured by the roaming region data collection unit 108 for possible inclusion within the fingerprint data. Typically, the data would not be used to update the temporarily transferred fingerprint, but is transferred to the home region 103 for analysis and possible inclusion as a portion of the fingerprint data in the home region fingerprint storage area 24.

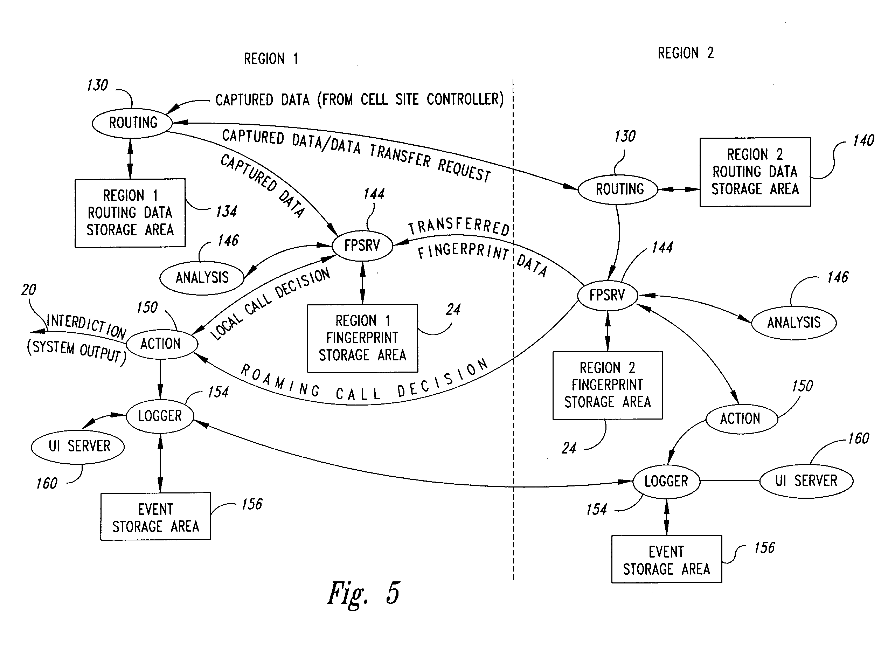

The various operations and data processing steps performed by the system 100 are illustrated in Figure 5. Figure 5 illustrates an example wherein region 1 and region 2 contain identical components. In the example illustrated in Figure 5, the unauthenticated cellular telephone is operating in region 1. The captured transmission characteristics and other data are referred to in Figure 5 as captured data or event data. The techniques used to capture data are well-known in the art, and need not be described herein. The captured data includes the ESN/MIN of the unauthenticated cellular telephone. The captured data is provided to a routing routine 130 to determine whether the MIN corresponds to an authorized cellular telephone in region 1.

If the captured data corresponds to a cellular telephone whose fingerprint data is stored in the region 1 fingerprint storage area 24, the region 1 authentication processor 2a (see Figures 3A and 3B) will process the data in a conventional manner. As will be discussed in greater detail below, the routing routine 130 uses data from a region 1 routing data storage area 134 to determine whether the ESN/MIN of the unauthenticated cellular telephone corresponds to region 1 160. For example, the NPA (area code) can be used by the routing routine 180 to readily determine whether the unauthenticated cellular telephone is from region 1. If the unauthenticated cellular telephone is not from region 1, the system 100 will transfer the captured data to the region whose fingerprint data storage area 24 (see Figures 3A and 3B) contains the correct fingerprint data, or transfer the fingerprint data to the region 1 authentication processor 2a for analysis.

In the example illustrated in Figure 5, it is assumed that the unauthenticated cellular telephone is from region 2, and has a fingerprint stored in the region 2 fingerprint storage area 24. In the first embodiment, the captured data is transferred from region 1 to region 2 for analysis within the region that stores the fingerprint data corresponding to the transmitted ESN/MIN. The region 1 routing routine 130 transfers the captured data to an identical routine 130 in region 2. The region 2 routing routine 130 uses data from a region 2 routing data storage area 140. The region 2 routing routine 130 uses routing data in the region 2 routing data storage area 140 to confirm that the captured data corresponds to a cellular telephone from region 2. The captured data is passed from the region 2 routing routine 130 to a fingerprint server (FPSRV) routine 144. The region 2 FPSRV routine 144 passes the captured data to an analysis routine 146 in region 2 for analysis of the captured data with respect to the stored fingerprint data in the region 2 fingerprint storage area 24. As previously discussed any suitable form of signature analysis may be used in the system 100.

In addition to routing captured data from the region 2 routing routine 130 to the region 2 analysis routine 146, the region FPSRV routine 144 controls access to the region 2 fingerprint storage area 24. The region 2 fingerprint storage area 24 may use any commercial database, such as the relational databases produced by Oracle Corporation, or other conventional relational database. Such commercial database storage systems are simple to implement and work satisfactorily for low call volumes. However, for greater call volume, the region 2 fingerprint storage area 24 is an index-based storage system. In an index-based storage system, the region 2 FPSRV routine 144 calculates an index value based on the ESN and/or MIN and uses the calculated index value as a pointer to a specific location within the region 2 fingerprint storage area 24. Such an index-based storage system decreases the access time to retrieve the fingerprint data from the region 2 fingerprint storage area 24 and allows the processing of a greater call volume than is possible with a relational database.

As previously discussed, the region 2 analysis routine 146 analyzes the captured data with respect to the stored fingerprint data and determines whether the present call is a valid call from the authorized cellular telephone or an invalid call from a fraudulent cellular telephone. The results of the analysis are provided to the region 2 FPSRV routine 144 by the region 2 analysis routine 146. The region 2 FPSRV 144 provides a roaming call decision to an action routine 150 in the region 1. The roaming call decision may include analysis data as well as a go/no-go binary-type response. If the present call is a local call, the FPSRV routine 182 provides a local call decision to an action routine 186. The local call decision includes a go/no-go binary-type response.

The region 1 action routine 150 generates an interdiction signal or a confirmation signal as the system output 20 to the cell site controller 4 (see Figure 1) in region 1 if the cell site controller requires a confirmation signal. As previously noted, some cell site controllers 4 require a message indicating whether or not the present call is valid or invalid. Other types of cell site controllers 4 require a message only in the event that the present call is determined to be an invalid call from a fraudulent cellular telephone. The region 1 action routine 150 may be designed to accommodate the specific requirements of the cell site controller 4 with which the system 100 is operating.

The region 1 action routine 150 also forwards data to a logger routine 154 in region 1. The region 1 logger routine 154 records the results of the analysis in an event storage area 156 in region 1. In an exemplary embodiment, the region 1 event storage area 156 uses a commercial relational database, such as produced by Sybase Incorporated. The region 1 logger routine 154 can also record additional data, such as the captured data, including the ESN/MIN. The region 1 logger routine 154 can be configured to record events from all cellular telephone calls including valid and invalid cellular telephone calls. Alternatively, the region 1 logger routine 154 can be configured to record only event data associated with invalid calls from fraudulent cellular telephones. The region 1 logger routine 154 is also coupled to a user interface (UI) server 160 in region 1. The region 1 UI server 160 simply allows user access to the data within the region 1 event storage area 156 and permits the cell site operator to determine the type and format of data to be displayed using a user interface (not shown).

In an alternative embodiment, the fingerprint data is transferred from region 2 to region 1 for analysis within region 1. If the region 1 routing routine 130 has requested the transfer of fingerprint data to region 1 from region 2, that data transfer request is processed by the region 2 FPSRV routine 144 to access the region 2 fingerprint storage area 24. The fingerprint data is transferred from the region 2 to a FPSRV routine 144 in region 1 for analysis by an analysis routine 146 in the region 1. The region 1 FPSRV 144 and region 1 analysis routine 146 operate in an identical manner to the region 2 FPSRV 144 and region 2 analysis routine 146. In this embodiment, the region 1 analysis routine 146 analyzes the captured data with respect to the fingerprint data received from the region 2 fingerprint storage area 24. Once the fingerprint data has been transferred to the region 1 FPSRV routine 144, the steps performed by the region 1 analysis routine 146, region 1 action routine 150, and region 1 logger routine 154 are identical to those previously described. For the sake of brevity, that description will not be repeated.

The region 2 also includes a logger routine 154 and event storage area 156, as well as a user interface server 160. These components operate in an identical manner to the corresponding components in region 1 and need not be described again. The region 2 logger routine 154 is coupled to and receives data from a region 2 action routine 150 in region 2. In addition, the region 2 logger routine 154 is coupled to and exchanges data with the region 1 logger routine 156. This allows one region to access the event storage area 192 of a different region and thereby generate reports as needed.

In the embodiments discussed above, the region 1 routing routine 130 accesses the region 1 routing data storage area 134 to determine which region contains the fingerprint data associated with the authorized cellular telephone. In a conventional cellular telephone system, routing data tables in each region contain data for the NPAs of all telephone systems throughout the country. However, a serious disadvantage of this system is that the size and complexity of routing data tables of this type increases cost. In addition, updating routing data tables of this type is a monumental task. For example, if one region of the country adds a new NPA (area code) or a new NXX, the routing data tables of every region in the entire country must be updated to include the new NPA or NXX. For example, a new NXX within the 206 area code in the western Washington area must be added to each and every routing data table throughout the country. If a service provider in New Jersey, for example, fails to update its routing data tables in a timely fashion, a user in New Jersey will be unable to place calls to the new NXX in the 206 area code because the local system will not recognize such an NXX. This has proven to be a real problem. To overcome this problem, the system 100 uses a unique technique for updating the telephone routing information.

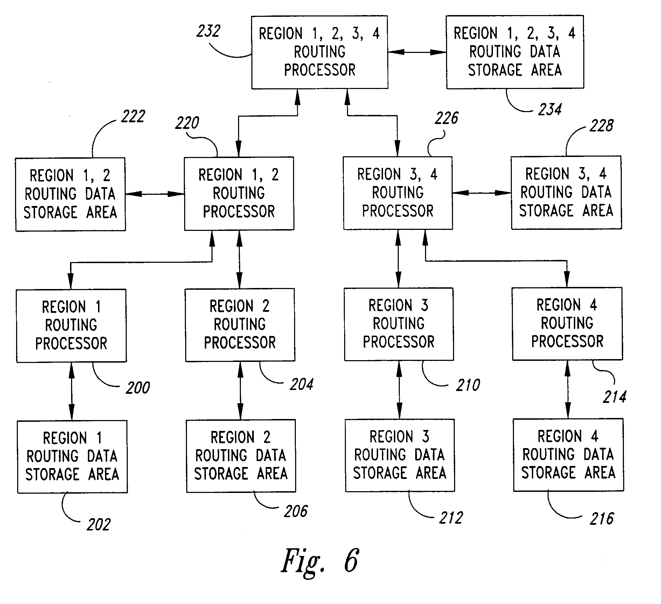

Figure 6 is a functional block diagram illustrating the operation of the system 100 when updating routing processor data storage areas. As illustrated in Figure 6, the routing processor storage areas are logically arranged in a hierarchical fashion. At the lowest level of the hierarchy are the regional routing processors, such as the home region routing processor 110 (see Figure 4) and the roaming region routing processor 118. At the next highest level in the logical hierarchy are routing processors that control routing between two or more regional processors. This logical hierarchy continues with each successively higher level controlling routing between more and more regions. At the top of the hierarchy is a single routing processor that contains routing data for the entire country, for example.

Figure 6 illustrates a region 1 routing processor 200 coupled to a region 1 routing data storage area 202. A region 2 routing processor 204 is coupled to a region 2 routing data storage area 206. Similarly, region 3 and region 4 routing processors 210 and 214 are coupled to respective routing data storage areas 212 and 216. The region 1 routing data storage area 202 contains information used to identify all cellular telephones whose MINs, or other identification data, subscribe to service provider in region 1. The region 1 routing processor 200 implements the region 1 routing routine 150 (see Figure 5) to determine whether the transmitted identification data (*e*.*g*., the ESN/MIN) of the unauthenticated cellular telephone matches the data entries in the region 1 routing data storage area 202. As previously discussed, the NPA and NXX portions of the MIN transmitted from the unauthenticated cellular telephone can be compared with the data in the region 1 routing data storage area. If the transmitted NPA and/or NXX are not within the range of data values stored in the region 1 routing data storage area 202, the region 1 routing processor 200 cannot determine the region in which the fingerprint data is stored. Therefore, the region 1 routing processor 200 relays the identification data (*e*.*g*., the ESN/MIN) to the next highest level in the hierarchical routing system. In one embodiment, the routing processor 200 relays all captured data, including captured transmission characteristics, to the next highest level in the hierarchical routing system. Alternatively, only identification data is relayed by the hierarchy of routing processors.

In the example illustrated in Figure 6, a region 1,2 routing processor 220 is coupled to a region 1,2 routing data storage area 222. The region 1,2 routing data storage area 222 contains routing data (*e*.*g*., the NPA and NXX) for all authorized cellular telephones for both region 1 and region 2. Thus, if the unauthenticated cellular telephone, which is operating in region 1, has fingerprint data stored in region 2, the region 1,2 routing processor 220 can identify region 2 as the home region for the unauthenticated cellular telephone. At the lowest level of the hierarchy, the routing data storage areas contain routing data only for its own region. The routing processor at the next level of the hierarchy (*e*.*g*., the region 1,2 routing processor 220) can control routing for all regions coupled to it at a lower level in the hierarchy. Thus, the region 1 routing data storage area 202 contains only information for region 1, while the region 2 routing data storage area 206 contains routing data only for region 2. The routing data storage area at the next highest level of the hierarchy contains routing data for a number of regional processors. As illustrated in Figure 6, the region 1,2 routing data storage area 222 contains routing data for both region 1 and region 2. Similarly, a region 3,4 routing processor 226 is coupled to a region 3,4 routing data storage area 228. The region 3,4 routing data storage area 228 contains routing data for both region 3 and region 4.

The hierarchical routing system illustrated in Figure 6 requires routing processors to go to successively higher levels in the hierarchy until the home region for an unauthenticated cellular telephone has been identified. For example, a call to a cell site controller within the home region for the authorized cellular telephone is processed within that particular region. If a call to a cell site controller in region 1 has fingerprint data contained in region 2, the region 1,2 routing processor, using data in the region 1,2 routing data storage area 222, will control communications between regions 1 and 2, respectively. The hierarchy illustrated in Figure 6 may be organized in any convenient fashion. For example, region 1 may cover the western Washington area, while region 2 covers eastern Washington. The region 1 routing data storage area 202 contains routing data only for western Washington. Similarly, the region 2 routing data storage area 206 only contains routing data for eastern Washington. However, the region 1,2 routing data storage area 222 contains routing data for both eastern and western Washington.

If a cellular telephone call originates in region 1 by a cellular telephone with its fingerprint data stored in region 3, neither the region 1 routing processor 200 nor the region 1,2 routing processor 220 will be able to identify the correct home region for the unauthenticated cellular telephone. The region 1 routing processor 200 will relay the identification data to the region 1,2 routing processor 220. Because the region 1,2 routing processor 220 cannot identify the home region for the unauthenticated cellular telephone, the region 1,2 routing processor relays the identification data to the next highest level in the hierarchy, *i*.*e*., a region 1,2,3,4 routing processor 232, which is coupled to a region 1,2,3,4 routing processor 234. The region 1,2,3,4 routing processor 234 can identify authorized cellular telephones from regions 1 to 4. In the present example, the region 1,2,3,4 routing data storage area 234 contains data that identifies region 3 as the home region for the unauthenticated cellular telephone. Extending the example previously discussed wherein region 1 includes western Washington and region 2 includes eastern Washington, region 3 may cover the western Oregon area, while the region 4 covers eastern Oregon. The region 3 routing data storage area 212 contains information for cellular telephones from western Oregon, while the region 4 routing data storage area 216 contains data for eastern Oregon. The region 3,4 routing data storage area 228 contains routing data for both western Oregon and eastern Oregon. The region 1,2,3,4 routing data storage area 234 contains routing data for all of Washington and Oregon. The next highest level in the hierarchy (not shown) may contain routing data for the northwest United States, including Washington, Oregon, Idaho, and Montana. Thus, it can be seen that geographical regions or markets can be organized into a hierarchy such that the lowest levels of the hierarchy contain only local routing information and successively higher levels of the hierarchy contain additional routing information.

As previously discussed, the system 100 can transfer captured transmission characteristics and other data from the roaming region to the home region for analysis, or request fingerprint data from the home region for analysis by the region in which the present call is originating. Once the home region has been identified, communication between the region in which the unauthenticated cellular telephone is located and the home region may be established directly. This is particularly useful when the fingerprint data is to be transferred from the home region to the roaming region for analysis within the roaming region because the fingerprint data may be transferred directly from the home region fingerprint storage area 24 (see Figure 4) to the roaming region without the necessity of relaying fingerprint data through the various routing processors. For the embodiment where captured transmission characteristics and other data are transferred to the home region, the captured data may be transferred directly from the roaming region to the home region. Alternatively, the captured data may be passed from the roaming region to the next hierarchical level along with the identification data if it cannot be processed within the roaming region. In the example discussed above, the region 1 routing processor 200 recognizes that it cannot process the captured data from the unauthenticated cellular telephone (because the fingerprint data is not stored in region 1, but rather in region 3). Therefore, the region 1 routing processor 200 passes the captured data to the region 1,2 routing processor 220. Because the identification data (*e*.*g*., the MIN) is not contained within the region 1,2 routing data storage area 222, the region 1,2 routing processor 220 passes the captured data to the next highest level in the hierarchy. In the present example, the region 1,2 routing processor 220 passes the captured data onto the region 1,2,3,4 routing processor 232. The region 1,2,3,4 routing processor 232 uses data within the region 1,2,3,4 routing data storage area 234 to identify region 3 as the home region for the unauthenticated cellular telephone. The region 1,2,3,4 routing processor 232 passes the captured data down to the region 3 routing processor 210 via the region 3,4 routing processor 226. This permits the analysis of captured data within the region that stores the fingerprint corresponding to the authorized cellular telephone. As previously discussed, the authentication processor (not shown) within region 3 performs a conventional signature analysis and passes the result back to the region 1 authentication processor (not shown) using the various routing processors.

It should be noted that, in an exemplary embodiment, signature analysis is only performed at the lowest level of the hierarchy by analysis units within the regional authentication processors. For example, the region 1,2 routing processor 220 only provides routing information and does not perform signature analysis. Alternatively, the region 1,2,3,4 routing processor 232 may be part of its own authentication system. In such circumstances, the region 1,2,3,4 routing processor 232 may retain the captured data transferred from the region 1,2 routing processor 220 and transmit a request for transfer of the fingerprint data from region 3. A fingerprint data transfer request is relayed to the region 3 routing processor 210 via the region 3,4 routing processor 226 and the fingerprint data is transferred to an analysis unit (not shown) for the region 1,2,3,4.

In yet another alternative, a fingerprint data storage area 24 may be associated with region 1,2,3,4. In this embodiment, the region 1,2,3,4 fingerprint data storage area 24 serves as a central fingerprint storage area, as described above. The central fingerprint storage area 24 in the region 1,2,3,4 may be used for storage of fingerprint data for cellular telephones whose MIN corresponds to a region that does not have the system 100. In this embodiment, the other regional routing processors, such as the region 1 routing processor 200, will be unable to identify a region corresponding to the transmitted MIN. At each successive level of the hierarchy, the routing processor, such as the region 1,2 routing processor 220, will be unable to identify the region associated with the MIN until the level of the region 1,2,3,4, where the fingerprint data in the central fingerprint storage area in the region 1,2,3,4 is used by the analysis unit (not shown) in region 1,2,3,4. The central fingerprint storage area effectively functions as a home region for cellular telephones that might otherwise be homeless. Thus, it is apparent to those of ordinary skill in the art that a distributed authentication system offers a variety of possible occasions for data storage and data analysis. This is particularly advantageous in a dynamic system, such as the cellular telephone industry, where large numbers of new users cause service providers to continually adjust their NPA and NXX values.

Another distinct advantage of the hierarchical routing system illustrated in Figure 6 is the ability to update data in the routing data storage areas. As discussed above, conventional systems require that each of the routing data storage areas contain data for all areas of the country. This is impractical in a dynamic situation, such as the cellular telephone industry, where continuous changes in the NPA and NXX values would require massive changes in all routing tables used throughout the country. Instead, the system 100 of the present invention provides a unique technique for automatically updating routing information. Using the system illustrated in Figure 6, the region 3 routing processor, for example, does not need to know region 1 routing information. Thus, the routing data in the region 3 routing data storage area 212 pertains only to region 3. Similarly, the region 4 routing data storage area 216 need only contain data pertaining to region 4. However, the region 3,4 routing data storage area 228 must contain data for both region 3 and region 4.

Routing data within the regional routing data storage areas may be readily changed using conventional techniques. For example, the region 3 routing data storage area 212 could be altered by the service provider to include a new NXX. The service provider merely accesses the data using a computer terminal (not shown) and alters the data within the region 3 routing data storage area 212. With the system of the present invention, a change in the region 3 routing data storage area 212 will have no effect on the data in the region 4 routing data storage area 216. However, the alteration of the data within the region 3 routing data storage area 212 is detected and those changes are passed up the hierarchical system so that each routing data storage area at a higher level within the chain is automatically updated. Many different well-known techniques, such as check sums, cyclic redundancy checks, or the like, can be used to detect changes to the routing data storage area. In an exemplary embodiment, the routing data storage area contains a date indicating the last alteration of data within the routing data storage area. For example, assume that the region 3 routing data storage area 212 has been revised to include a new NXX. The new NXX is added to the region 3 routing data storage area 212, causing a change in the last update date. The region 3 routing processor 210 detects the change in the last update data and relays the altered routing data from the region 3 routing data storage area 212 up to the region 3,4 routing processor 226. The region 3,4 routing processor 226 updates the region 3,4 routing data storage area 228 and changes the last update date for the region 3,4 routing data storage area. The alteration of the region 3,4 routing data storage area 228 is detected by the region 3,4 routing processor 226, which relays the altered routing data from the altered routing data storage area to the next higher hierarchical level. In the example above, the region 3,4 routing processor 226 relays the altered routing data from the region 3,4 routing data storage area 228 up to the region 1,2,3,4 routing processor 232, which in turn updates the region 1,2,3,4 routing data storage area 234. Thus, changes in lower levels of the hierarchy are automatically relayed to upper levels of the hierarchical routing system. The advantage of this technique is that routing data is automatically updated at each successively higher level. This eliminates the reliance on operators to promptly alter all routing data tables.

Even if each routing data table contains data for all areas, the same technique can be used to relay routing data back down the hierarchical chain. This technique is effective not only with the wireless communications validation exemplified by the system 100, but is also useful to update the routing data tables of any telephone calling system. For example, the current telephone routing data tables could be updated in a similar manner. Thus, the addition of a new NPA or NXX in one region of the country will automatically ripple through other regions of the country until all routing data tables have been updated appropriately. While the example of Figure 6 is limited to three levels of hierarchy, the principles may be readily extended to any number of regions, collections of regions, and the like. In addition, many different variations are possible. For example, the region 1,2 routing processor 220 is used to control routing for regions 1 and 2. However, the region 3,4 routing processor can control more than two regions. Furthermore, the principles of the present invention are readily extendible to more than the three levels of hierarchy illustrated in Figure 6.

It is to be understood that even though various embodiments and advantages of the present invention have been set forth in the foregoing description, the above disclosure is illustrative only, and changes may be made in detail, yet remain within the broad principles of the invention. Therefore, the present invention is to be limited only by the appended claims.

## Claims

1. A distributed system for the validation of a wireless communication using a customer wireless telephone in a wireless telephone system, the system comprising:
a plurality of authentication processors, each serving a separate service area with a particular one of said plurality of authentication processors having a data collection element to acquire authentication data from an unauthenticated wireless telephone, said particular processor acquiring authentication data from an unauthenticated wireless telephone during a present communication with the unauthenticated wireless telephone;
a storage area containing reference data associated with the customer wireless telephone;
an analysis unit to analyze said acquired authentication data with respect to said stored reference data associated with the customer wireless telephone to determine if the unauthenticated wireless telephone is the customer wireless telephone or a fraudulent wireless telephone, said analysis unit generating an indicator indicating that said analysis unit has determined the unauthenticated wireless telephone to be one of the customer wireless telephone and a fraudulent wireless telephone; and
a communication processor to control communication between said particular processor, said storage area and said analysis unit.

2. The system of claim 1 wherein said particular processor is a first of said plurality of authentication processor that serves a first service area and includes said data collection element to acquire authentication data from an unauthenticated wireless telephone during a present communication with said unauthenticated wireless telephone, and a second of said plurality of authentication processor that serves a second service area different from said first service area and includes a storage area containing reference data associated with the customer wireless telephone.

3. The system of 1 wherein said analysis unit is a portion of said particular processor and said storage area is a portion of a second of said plurality of authentication processors, said communication processor routing said stored reference data from said second of said plurality of authentication processors to said analysis unit of said particular processor to permit said analysis of said acquired authentication data with respect to said stored reference data in said particular processor.

4. The system of claim 3 wherein said communication processor routes said stored reference data from said second of said plurality of authentication processors to said analysis unit of said particular processor during said present communication and said analysis unit performs said analysis of said acquired authentication data with respect to said stored reference data during said present communication.

5. The system of 1 wherein said analysis unit and said storage area are portions of a second of said plurality of authentication processors, said communication processor routing said acquired authentication data from said particular processor to said analysis unit of said second of said plurality of authentication processors to permit said analysis of said acquired authentication data with respect to said stored reference data in said second of said plurality of authentication processors.

6. The system of claim 5 wherein said communication processor routes said acquired authentication data from said particular authentication processor to said analysis unit of said second of said plurality of authentication processors during said present communication and said analysis unit performs said analysis of said acquired authentication data with respect to said stored reference data during said present communication.

7. The system of 1 wherein said communication processor routes said stored reference data from said storage area to said analysis unit during said present communication and said analysis unit performs said analysis of said acquired authentication data with respect to said stored reference data during said present communication.

8. The system of claim 2 wherein said second service area is designated as a home service area of a wireless service provider for the customer wireless telephone, the system further including a third authentication processor serving both of said first and second service areas, said analysis unit being associated with said third authentication processor, said communication processor also controlling communication with said third authentication processor wherein said communication processor routes said acquired authentication data from said first authentication processor to said third authentication processor and routes said stored reference data from said storage area in said second authentication processor to said third authentication processor.

9. The system of claim 8 wherein said communication processor routes said acquired authentication data from said first authentication processor to said analysis unit associated with said third authentication processor during said present communication and said analysis unit performs said analysis of said acquired authentication data with respect to said stored reference data during said present communication.

10. The system of any of the preceding claims 1 and 2 wherein said particular processor generates an interdiction signal to indicate that said present communication is invalid if said response indicator indicates that the unauthenticated wireless telephone has been determined to be a fraudulent wireless telephone.

11. The system of any of the preceding claims 1 and 2 wherein said particular processor generates an authorization signal to indicate that said present communication is valid if said response indicator indicates that the unauthenticated wireless telephone has been determined to be the customer wireless telephone.

12. The system of any of the preceding claims 1 and 2 wherein said communication processor routes said stored reference data from said storage area to said analysis unit at a time prior to said present communication and said analysis unit performs said analysis of said acquired authentication data with respect to said stored reference data during said present communication.

13. The system of any of the preceding claims 1 and 2 wherein said analysis unit further analyzes said acquired authentication data for inclusion as a portion of said stored reference data.

14. The system of claim 13 wherein said data collection element acquires subsequent authentication data from said unauthenticated wireless telephone during a subsequent communication with said unauthenticated wireless telephone subsequent to said present communication and said analysis unit analyzes said subsequently acquired authentication data with respect to said stored data, including said portion of said stored reference data if said analysis unit included said acquired authentication data as said portion of said stored reference data.

15. The system of any of the preceding claims 1 and 2 for use with a wireless telephone transmitting identification data identifying the unauthenticated wireless telephone as said customer wireless telephone wherein said storage area is associated with one of said plurality of authentication processors, the system further including a routing data storage area to store routing data in association with the identification data of the wireless telephone identifying said storage area as being associated with a specific one of said plurality of authentication processors, and a routing processor to access said routing storage area for said routing data associated with the identification data of the wireless communication device, said routing processor using said routing data to determine with which one of said plurality of authentication processors is associated with said storage area to obtain from said storage area said stored reference data associated with the customer wireless telephone for use by said analysis unit.

16. The system of any of the preceding claims 1 and 2 for use with a wireless telephone transmitting identification data wherein said storage area is associated with one of said plurality of authentication processors, the system further including a routing processor associated with each of said plurality of authentication processors to determine with which of said plurality of authentication processors said storage area is associated, and a corresponding routing data storage area associated with each of said routing processors to store routing data in association with the identification data of the wireless communication device identifying said storage area as being associated with a specific one of said plurality of authentication processors, said routing processor accessing said corresponding routing storage area for said routing data associated with the identification data of the wireless communication device.

17. The system of claim 16, further including means within a first one of said routing processors for altering said routing data in said corresponding routing data storage area.

18. The system of claim 17 wherein said first routing processor generates an alteration indicator to indicate alteration of said routing data in said corresponding routing data storage area, the system further including alteration detection means within a second one of said routing processors to detect said alteration indicator, said second routing processor, in response to detection of said alteration indicator, altering said routing data in said corresponding routing data storage area to match said altered routing data in said routing data storage area corresponding to said first routing processor.

19. The system of any of the preceding claims 1 and 2 wherein said communication processor comprises a high-speed data link.

20. The system of any of the preceding claims 1 and 2 wherein said communication processor comprises a dial-up data link.

21. A method for the validation of a wireless communication using a customer wireless telephone in a wireless telephone system, the method comprising the steps of:
acquiring authentication data from an unauthenticated wireless telephone during a present communication with said unauthenticated wireless telephone in a first service area;
storing reference data associated with the customer wireless telephone in a second service area different from said first service area;
analyzing said acquired authentication data with respect to said stored reference data associated with the customer wireless telephone to determine if said unauthenticated wireless telephone is the customer telephone or a fraudulent wireless telephone;
controlling access to said stored reference data and transferring said stored reference data for said step of analyzing; and
generating a response indicator indicating that said unauthenticated wireless telephone has been determined to be one of the customer wireless telephone and a fraudulent wireless telephone.

22. The method of claim 21, further including the step of generating an interdiction signal to indicate that said present communication is invalid if said response indicator indicates that the unauthenticated wireless telephone has been determined to be a fraudulent wireless telephone.

23. The method of claim 21, further including the step of generating an authorization signal to indicate that said present communication is valid if said response indicator indicates that the unauthenticated wireless telephone has been determined to be the customer wireless telephone.

24. The method of claim 21 wherein said step of analyzing is performed in said first service area, said step of controlling and transferring routing said stored reference data from said second service area to said first service area to permit said step of analyzing to be performed in said first service area.

25. The method of claim 24 wherein said step of controlling and transferring routes said stored reference data from said second service area to said first service area during said present communication and said step of analyzing is performed during said present communication.

26. The method of claim 21 wherein said step of analyzing is performed in said second service area, said step of accessing and transferring routing said acquired authentication data from said first service area to said second service area to permit said step of analyzing to be performed in said second service area.

27. The method of claim 26 wherein said step of controlling and transferring routes said acquired authentication data from said first service area to said second service area during said present communication and said step of analyzing is performed during said present communication.

28. The method of claim 21 wherein said step of analyzing further analyzes said acquired authentication data for inclusion as a portion of said stored reference data.

29. The method of claim 21 for use with a wireless telephone transmitting identification data identifying the unauthenticated wireless telephone as said customer wireless telephone wherein step of storing is performed in one of said first and second service areas, the method further including the steps of storing routing data in association with the identification data of the wireless telephone identifying said storage area as being associated with a specific one of said first and second service areas, accessing said routing data for said routing data associated with the identification data of the wireless communication device and determining in which one of said first and second service areas step of storing is being performed to obtain said stored reference data associated with the customer wireless telephone for use by said step of analyzing.
